# EUROPÄISCHE PATENTANMELDUNG

(11) **EP 4 717 934 A1**
(43) Veröffentlichungstag der Anmeldung: **01.04.2026**
(21) Anmeldenummer: 25204741.0
(22) Anmeldetag: 25.09.2025
(51) Int. Cl.: F16B 15/00

(54) **BLECH MIT GESTANZTEN STRUKTUREN ZUM VERBINDEN VON ZWEI HOLZELEMENTEN, VERBUND AUS ZWEI HOLZELEMENTEN MIT DEM BLECH UND VERFAHREN ZUM HERSTELLEN DES BLECHS**

(30) Priorität: 26.09.2024 DE 102024127967
(71) Anmelder: Adolf Würth GmbH & Co. KG, 74653 Künzelsau (DE)
(72) Erfinder: Johannes, Sänger, 76131 Karlsruhe (DE); Raphael, Fakler, 76137 Karlsruhe (DE); Sebastian, Zimprich, 76185 Karlsruhe (DE); Arne, Barz, 74532 Ilshofen (DE); Fabienne, Kellermann, 74564 Crailsheim (DE); Markus, Döllken, 76227 Karlsruhe (DE); Sven, Matthiesen, 76139 Karlsruhe (DE)
(74) Vertreter: Dilg, Haeusler, Schindelmann Patentanwaltsgesellschaft mbH

(57) **Zusammenfassung**

Die vorliegende Erfindung bezieht sich auf ein Blech (1) zum Verbinden von zwei Holzelementen (20, 30), wobei das Blech (1) gestanzte Strukturen (2) aufweist, die jeweils ein Loch (3) mit einem Durchmesser von weniger als 5 mm, vorzugsweise weniger als 3,5 mm, weiter bevorzugt weniger als 2,5 mm, und vier Zähne (4) aufweisen, die verteilt um einen Umfang des Lochs (3) von einer Hauptoberfläche (5, 6) des Blechs (1) vorstehen. Die gestanzten Strukturen (2) sind an beiden Hauptoberflächen (5, 6) des Blechs (1) vorgesehen sind. Zumindest bei der Mehrheit der gestanzten Strukturen (2), vorzugsweise bei allen gestanzten Strukturen (2), stehen alle Zähne (4) einer jeweiligen gestanzten Struktur (2) von derselben Hauptoberfläche (5, 6) des Blechs (1) vor. Eine Anzahl der gestanzten Strukturen (2) an der einen Hauptoberfläche (5) beträgt mindestens 90%, vorzugsweise 100%, einer Anzahl der gestanzten Strukturen (2) an der anderen Hauptoberfläche (6).

## Beschreibung

Die Erfindung betrifft ein Blech mit gestanzten Strukturen zum Verbinden von zwei Holzelementen, sowie einen Verbund aus zwei Holzelementen mit dem dazwischen angeordneten Blech und ein Verfahren zum Herstellen des Blechs.

Es ist bekannt, Holzbalken mit Stoßverbindungen durch eine Scher- oder Zug/Scher-Verbindung miteinander zu verbinden. Dabei wird bspw. ein Ende eines Balkens im 0 bis 90°-Winkel an einen anderen Balken angesetzt und dort mit Schrauben oder anderen stiftförmigen Verbindungsmittel befestigt. Die Schrauben können unter einem Winkel durch beide oder mehrere Balken geschraubt werden, insbesondere unter einem 90°-Winkel von der dem einem Balken gegenüberliegenden Seite.

Ferner ist bekannt, Holzbalken an einer Betonwand oder an einer Metallplatte, bspw. einem Holzverbinder, zu befestigen. Zu diesem Zweck werden bspw. Schrauben oder stiftförmige Verbindungsmittel durch das Holz und anschließend in die Betonwand bzw. in die Metallplatte geschraubt.

Bei Holz-Holz Verbindungen wird eine hohe Steifigkeit insbesondere durch eine Leimverbindung erreicht. Dies erfordert spezielle Applikationsumgebungen. Andere Holz-Holz-Verbinder erreichen die Steifigkeitswerte der Verbindung aktuell kaum.

WO 2022/090281 A1 offenbart ein Verfahren zum Verbinden von mindestens zwei Holzbauplatten zur Schall- und/oder Wärmedämmung. Eine Metallplatte oder ein Metallstreifen mit Zähnen, die in Richtung der Oberfläche der mindestens einen Holzplatte weisen, wird in einer Richtung im Wesentlichen senkrecht zur Oberfläche der Metallplatte oder des Metallstreifens angeordnet, ein Isolierelement mit Zähnen wird an der zweiten Oberfläche der Holzbauplatte angebracht, eine zweite Metallplatte oder ein Metallstreifen wird an dem Isolierelement angebracht, ein drittes Element einer Holzbauplatte mit Zähnen wird an der zweiten Oberfläche der zweiten Metallplatte oder des Metallstreifens angebracht, und Schrauben werden durch mindestens ein Element und mindestens eine Platte eingeführt, wobei die Schrauben beim Einführen die Metallplatte oder den Metallstreifen durchbohren.

US 2017 /0073972 A1 offenbart eine Verbundbaugruppe mit einer Reihe länglicher Schichten, die der Länge nach miteinander verbunden sind. Mindestens zwei der länglichen Schichten weisen jeweils einen oberen länglichen Abschnitt und einen unteren länglichen Abschnitt auf, die durch eine Verbindungsanordnung Ende an Ende an einer dazwischenliegenden Verbindungsstelle miteinander verbunden sind. Der obere längliche Abschnitt besteht aus einem Holzmaterial und der untere längliche Abschnitt besteht aus einem anderen Material als Holz. Der untere längliche Abschnitt kann einen Verstärkungsstab enthalten.

Alle aufgeführten Lösungen erreichen nur eine geringere Steifigkeit im Verbund. Außerdem ist bei konventionellen Holzverbindungen nachteilig, dass die Lasten, die die Verbindungen halten, zu gering sind, so dass höhere Traglasten oder höhere Steifigkeiten erwünscht sind.

Es ist die Aufgabe der vorliegenden Erfindung, ein Blech zum Verbinden von zwei Holzelementen bereitzustellen, das höhere Steifigkeitswerte und höherer Traglasten der Holz-Holz-Verbindung erreicht. Diese Aufgabe wird durch das Blech mit den Merkmalen des Anspruchs 1 gelöst. Vorteilhafte Weiterbildungen sind in den abhängigen Ansprüchen definiert.

Gemäß einem ersten Aspekt der vorliegenden Erfindung ist ein Blech zum Verbinden von zwei Holzelementen vorgesehen. Das Blech weist gestanzte Strukturen auf, die jeweils ein Loch mit einem Durchmesser von weniger als 5 mm, vorzugsweise weniger als 3,5 mm, weiter bevorzugt weniger als 2,5 mm, und vier Zähne aufweisen, die verteilt um einen Umfang des Lochs von einer Hauptoberfläche des Blechs vorstehen. Die gestanzten Strukturen sind an beiden Hauptoberflächen des Blechs vorgesehen, und zumindest bei der Mehrheit der gestanzten Strukturen, vorzugsweise bei allen gestanzten Strukturen, stehen alle Zähne einer jeweiligen gestanzten Struktur von derselben Hauptoberfläche des Blechs vor. Eine Anzahl der gestanzten Strukturen an der einen Hauptoberfläche beträgt mindestens 90%, vorzugsweise 100%, einer Anzahl der gestanzten Strukturen an der anderen Hauptoberfläche.

Im Kontext der vorliegenden Erfindung kann der Begriff "Hauptoberfläche des Blechs" die größte Fläche des Blechs bezeichnen. Das Blech hat im Wesentlichen die Form eines Hexaeders, wobei zwei gegenüberliegende Flächen des Hexaeders, die als Hauptoberflächen bezeichnet werden können, deutlich größer sind als die dazwischenliegenden Mantelflächen.

Das Blech kann aus einem Metall, insbesondere Stahl, beispielsweise ein unlegierter Stahl oder Edelstahl, oder Aluminium geschaffen sein.

An einer Verbindungsstelle liegen die beiden Holzelemente aneinander an, wobei zwischen diesen das Blech angeordnet ist. Bevorzugt liegen die beiden Holzelemente an der Verbindungsstelle vollflächig an dem Blech an. Es jedoch möglich, dass Abschnitte der Holzelemente direkt aneinander anliegen. Die an der Verbindungsstelle entstehende Holzverbindung zwischen beiden Holzelementen und dem Blech wird durch Befestigungselemente, insbesondere Holzschrauben, zusammengehalten. Die Befestigungselemente drücken somit die Holzelemente mit einem bestimmten Anpressdruck an das Blech. Die Zähne werden in das Holz gedrückt, so dass sich die Zähne in den Holzfasern verhaken und eine überwiegend kraftschlüssige Verbindung zwischen dem Blech und den jeweiligen Holzelementen aufgebaut wird. Der Kraftschluss wirkt einer Verschiebung der Holzelemente relativ zueinander entgegen, d.h. die initiale Verschiebung der Holzelemente relativ zueinander ist erschwert. Eine relative Verschiebung der Holzelemente zueinander erfolgt somit erst bei - im Vergleich zu einer Holzverbindung ohne Blech - sehr stark erhöhter Schub- bzw. Scherkraft. Durch die Beilage des Blechs wird praktisch die Reibung in der Holz-Holz-Verbindung aktiviert, was die Steifigkeit der gesamten Verbindung erhöht.

Die vorliegende Erfindung sieht mit dem Blech ein flächenhaftes Verbindungsmittel vor, das im Vergleich mit dem Stand der Technik über eine reduzierte Einpresskraft verfügt und dennoch hohe Scherkräfte übertragen kann.

Gemäß einem Ausführungsbeispiel ist eine Blechdicke kleiner als 0,5 mm. Eine solch geringe Blechdicke (<0,5 mm) ermöglicht eine vereinfachte Verpackung, Transport und Handhabung des Blechs sowie eine Applikation des Blechs ohne Luftspalt zwischen den zwei Holzelementen, welche verbunden werden.

Gemäß einem Ausführungsbeispiel weisen die Zähne jeweils eine Grundlinie auf, die einer Schnittlinie des jeweiligen Zahns mit der entsprechenden Hauptoberfläche des Blechs entspricht und an der der jeweilige Zahn von der entsprechenden Hauptoberfläche des Blechs vorsteht, wobei ein Winkel der Grundlinie zu einer Kante des Blechs, vorzugsweise einer langen Kante des Blechs, vorzugsweise zwischen 30 und 60°, weiter bevorzugt zwischen 40 und 50°, besonders bevorzugt im Wesentlichen 45° beträgt. Gemäß einem Ausführungsbeispiel wird bei einer gekrümmten Grundlinie der Winkel als ein mittlerer Winkel gemessen, der zwischen der Kante des Blechs und einer Linie eingeschlossen wird, die Endpunkte der Grundlinie verbindet. Diese Zahnneigungen zur Längsseite des Blechs führen dazu, dass jeder der vier Zähne einer solchen Raspel-Lochung gleich belastet wird.

Gemäß einem Ausführungsbeispiel beträgt ein Gesamtvolumen aller vier Zähne einer jeweiligen gestanzten Struktur weniger als 2,5 mm³. Dabei können sich die Zähne der gestanzten Strukturen wirksam in die Holzfasern krallen und für eine besonders gute Steifigkeit und Traglast des Verbunds sorgen.

Gemäß einem Ausführungsbeispiel sind die Zähne derart gekrümmt, dass eine Zahnspitze eines jeweiligen Zahns vom Loch weg weist, und wobei die Zahnspitzen von benachbarten Zähnen nicht einen minimalen Abstand zwischen den benachbarten Zähne bilden, so dass beispielsweise die Zahnspitze eines Zahns zur lochabgewandten Seite gekrümmt bzw. gewölbt ist, aber nicht über den Zahnfuss ragt. Die Krümmung bzw. Wölbung der Zähne erzielt eine besonders starke Verbindung zwischen dem Blech und den Holzelementen. Die Krümmung der Zähne kann durch Einstellen einer bestimmten Stempeltiefe eines Stempels in das Blech erreicht werden. Der Stempel sorgt für die Ausbildung der gestanzten Strukturen. Vorzugsweise hat der Stempel im Querschnitt ein Vierkantprofil, weiter bevorzugt ein quadratisches Profil.

Gemäß einem Ausführungsbeispiel sind die Zähne gekrümmt, und ein Abstand zwischen zwei benachbarten Zähnen ist größer als der Durchmesser des Lochs, so dass eine wirksame Dichte der gestanzten Strukturen im Blech gebildet wird.

Gemäß einem Ausführungsbeispiel sind die gestanzten Strukturen jeweils in einer Matrix mit Zeilen und Spalten auf beiden Hauptoberflächen des Blechs angeordnet, wobei jeweils benachbarte Zeilen in Längsrichtung der Zeilen um einen halben Lochabstand voneinander verschoben sind und wobei jeweils benachbarte Spalten in Längsrichtung der Spalten um einen halben Lochabstand voneinander verschoben sind. Vorzugsweise sind die Zeilen senkrecht zu den Spalten orientiert.

Gemäß einem Ausführungsbeispiel weist die Matrix erste Zeilen mit ersten gestanzten Strukturen, deren Zähne von der einen Hauptoberfläche des Blechs vorstehen, und zweite Zeilen mit zweiten gestanzten Strukturen auf, deren Zähne von der anderen Hauptoberfläche des Blechs vorstehen, wobei die ersten Zeilen und die zweiten Zeilen zueinander benachbart und abwechselnd auf beiden Hauptoberflächen des Blechs angeordnet sind. Die matrixartige Anordnung der Zähne ermöglicht eine möglichst direkte Kraftleitung von einer Hauptoberfläche des Bleches auf die andere Hauptoberfläche, sowie eine einfache Herstellung des Blechs. Vorzugsweise sind die Abstände zwischen benachbarten Zeilen und die Abstände zwischen benachbarten Spalten jeweils konstant.

Gemäß einem Ausführungsbeispiel sind eine Orientierung der Zeilen und eine Orientierung der Spalten im Wesentlichen parallel zu einer jeweiligen Kante des Blechs sind.

Gemäß einem Ausführungsbeispiel verlaufen eine Orientierung der Zeilen und eine Orientierung der Spalten in jeweiligen Winkeln zu einer jeweiligen Kante des Blechs, wobei die Winkel in einem Bereich zwischen 30 und 60° liegen, vorzugsweise im Wesentlichen jeweils 45° betragen.

Gemäß einem Ausführungsbeispiel sind die gestanzten Strukturen einer Zeile abwechselnd auf beiden Hauptoberflächen des Blechs angeordnet sind, und/oder die gestanzten Strukturen einer Spalte sind abwechselnd auf beiden Hauptoberflächen des Blechs angeordnet. Bei den beiden letztgenannten Ausführungsbeispielen ist in vorteilhafter Weise ein direkter Kraftübertrag zwischen den Zähnen von benachbarter Spalten gegeben, so dass aufgrund dieser Herstellungsweise Eigenspannungen durch eine gleichmäßigere Verteilung minimiert und die herstellbedingte Ebenheit des Bleches optimiert werden können.

Gemäß einem Ausführungsbeispiel verlaufen die Zeilen parallel zu einer längeren Kante des Blechs und die Spalten verlaufen parallel zu einer kürzeren Kante des Blechs.

Gemäß einem Ausführungsbeispiel ist das Blech dazu konfiguriert, von einer Schraube durchschraubt zu werden.

Gemäß einem Ausführungsbeispiel weisen Zahnspitzen von gegenüberliegen Zähnen einer jeweiligen gestanzten Struktur in voneinander abgewandten Richtungen. Die Zahnkrümmung der Zahnspitze zur lochabgewandten Seite führt zu einer deutlichen Steigerung der Steifigkeit im Verbund.

Gemäß einem Ausführungsbeispiel ist eine Höhe der Zähne 1,5 bis 5-mal, vorzugsweise 2 bis 4-mal, weiter bevorzugt 2,5 bis 3,5-mal, größer als eine Dicke des Blechs, wodurch ein günstiges Gleichgewicht zwischen Zahnhöhe und Blechdicke erreicht wird.

Gemäß einem Ausführungsbeispiel weisen benachbarte Zähne derselben gestanzten Struktur einen gemeinsamen Überschneidungsbereich auf, der sich vertikal über der jeweiligen Hauptoberfläche des Blechs erstreckt. Gemäß einem Ausführungsbeispiel zeigen die benachbarten Zähne derselben gestanzten Struktur in einer ersten Seitenansicht ein Kronenprofil. Ein Kronenprofil kann einen Ring mit mehreren, mindestens drei aufgesetzten Zacken aufweisen. Gemäß einem Ausführungsbeispiel zeigen die benachbarten Zähne derselben gestanzten Struktur in einer zweiten Seitenansicht ein Profil von zwei nebeneinander angeordneten, sich teilweise überschneidenden Dreiecken oder Trapezen.

Gemäß einem Ausführungsbeispiel ist das Blech kaltverfestigt, und die Zähne sind gehärtet, damit sie sich nicht oder nur wenig verformen.

Gemäß einem Ausführungsbeispiel beträgt eine Anzahl der gestanzten Strukturen pro cm² zwischen 2 und 15, vorzugsweise zwischen 3 und 10, weiter bevorzugt zwischen 5 und 8.

Gemäß einem zweiten Aspekt der vorliegenden Erfindung ist Verbund aus zwei Holzelementen mit dem dazwischen angeordneten Blech vorgesehen. Das Blech kann als Beilage in Holz-Holz Verbindungen zur Steifigkeitssteigerung bspw. in Rippendecken eingesetzt werden.

Gemäß einem dritten Aspekt der vorliegenden Erfindung ist ein Verfahren zum Herstellen eines Blechs zum Verbinden von zwei Holzelementen vorgesehen. Das Verfahren hat einen Schritt zum Stanzen des Blechs mit einem Stempel, so dass gestanzte Strukturen entstehen, die jeweils ein Loch mit einem Durchmesser von weniger als 5 mm, vorzugsweise weniger als 3,5 mm, weiter bevorzugt weniger als 2,5 mm, und vier Zähne aufweisen, die verteilt um einen Umfang des Lochs von einer Hauptoberfläche des Blechs vorstehen. Die gestanzten Strukturen werden an beiden Hauptoberflächen des Blechs vorgesehen, und zumindest bei der Mehrheit der gestanzten Strukturen, vorzugsweise bei allen gestanzten Strukturen, stehen alle Zähne einer jeweiligen gestanzten Struktur von derselben Hauptoberfläche des Blechs vor. Eine Anzahl der gestanzten Strukturen an der einen Hauptoberfläche beträgt mindestens 90%, vorzugsweise 100%, einer Anzahl der gestanzten Strukturen an der anderen Hauptoberfläche.

Gemäß einem Ausführungsbeispiel des Verfahrens weist der Stempel ein Vierkant- oder Quadratprofil auf. Eine Kantenlänge des Stempels beträgt vorzugsweise zwischen 1 und 2,5 mm, weiter bevorzugt zwischen 1,2 und 1,6 mm.

Gemäß einem Ausführungsbeispiel des Verfahrens wird eine definierte Krümmung der Zähne eingestellt, indem eine bestimmte Stempeltiefe des Stempels verwendet wird.

Im Folgenden werden exemplarische Ausführungsbeispiele der vorliegenden Erfindung mit Verweis auf die folgenden Figuren detailliert beschrieben.
Figur 1 zeigt eine Seitenansicht und eine Draufsicht auf ein Blech gemäß einem Ausführungsbeispiel der vorliegenden Erfindung.
Figur 2 zeigt einen vergrößerten Ausschnitt der Seitenansicht der Figur 1.
Figur 3 zeigt einen vergrößerten Ausschnitt der Seitenansicht und der Draufsicht der Figur 1.
Figur 4 zeigt eine Seitensicht auf eine gestanzte Struktur aus einer Richtung A der Figur 3.
Figur 5 zeigt eine Seitensicht auf eine gestanzte Struktur aus einer Richtung B der Figur 3.
Figur 6 zeigt ein Anwendungsbeispiel eines Blechs gemäß einem Ausführungsbeispiel der vorliegenden Erfindung.
Figur 7 zeigt eine Seitenansicht und eine Draufsicht auf ein Blech gemäß einem Ausführungsbeispiel der vorliegenden Erfindung.

Gleiche oder ähnliche Komponenten in unterschiedlichen Figuren sind mit gleichen Bezugsziffern versehen.

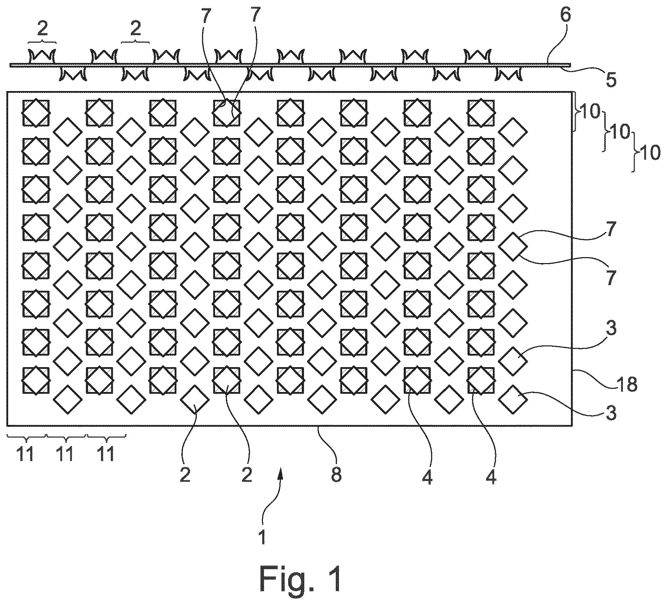

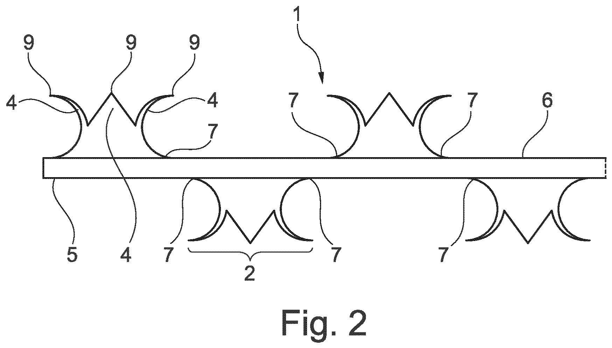

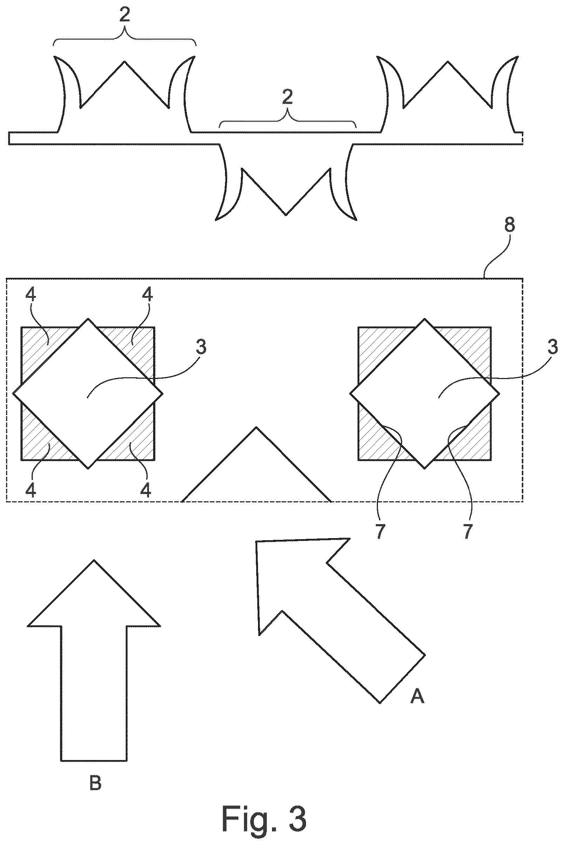

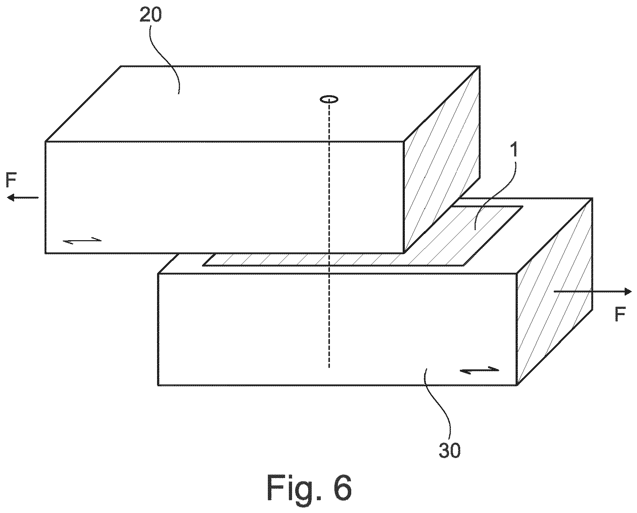

**Figur 1** zeigt eine Seitenansicht und eine Draufsicht auf ein Blech 1 gemäß einem Ausführungsbeispiel der vorliegenden Erfindung; **Figur 2** zeigt einen vergrößerten Ausschnitt der Seitenansicht der Figur 1; und **Figur 3** zeigt einen vergrößerten Ausschnitt der Seitenansicht und der Draufsicht der Figur 1. Das Blech 1 dient zum Verbinden von zwei Holzelementen 20, 30 (siehe Figur 6), wobei das Blech 1 gestanzte Strukturen 2 aufweist, die jeweils ein Loch 3 mit einem Durchmesser von weniger als 5 mm, vorzugsweise weniger als 3,5 mm, weiter bevorzugt weniger als 2,5 mm, und vier Zähne 4 aufweisen, die verteilt um einen Umfang des Lochs 3 von einer Hauptoberfläche 5, 6 des Blechs 1 vorstehen. Die gestanzten Strukturen 2 sind an beiden Hauptoberflächen 5, 6 des Blechs 1 vorgesehen. Eine Anzahl der gestanzten Strukturen 2 pro cm² kann zwischen 2 und 15, vorzugsweise zwischen 3 und 10, weiter bevorzugt zwischen 5 und 8 betragen. Beispielsweise kann das Blech 1 Außenmaße von 50 x 1000 mm aufweisen. Eine Anzahl der gestanzten Strukturen 2 kann dann zwischen 1300 und 6600, vorzugsweise zwischen 2600 und 5300, weiter bevorzugt zwischen 4000 und 4600 betragen. Zumindest bei der Mehrheit der gestanzten Strukturen 2, vorzugsweise bei allen gestanzten Strukturen 2, stehen alle Zähne 4 einer jeweiligen gestanzten Struktur 2 von derselben Hauptoberfläche 5, 6 des Blechs 1 vor. Eine Anzahl der gestanzten Strukturen 2 an der einen Hauptoberfläche 5 beträgt mindestens 90%, vorzugsweise 100%, einer Anzahl der gestanzten Strukturen 2 an der anderen Hauptoberfläche 6. Eine Blechdicke ist kleiner als 0,5 mm. Das Blech 1 ist dazu konfiguriert, von einer Schraube durchschraubt zu werden. Vorzugsweise ist das Blech 1 kaltverfestigt, und die Zähne 4 sind gehärtet.

Gemäß der Figur 1 weisen die Zähne 4 jeweils eine Grundlinie 7 auf, die einer Schnittlinie des jeweiligen Zahns 4 mit der entsprechenden Hauptoberfläche 5, 6 des Blechs 1 entspricht und an der der jeweilige Zahn 4 von der entsprechenden Hauptoberfläche 5, 6 des Blechs 1 vorsteht. Ein Winkel der Grundlinie 7 zu einer Kante 8 des Blechs 1, vorzugsweise einer langen Kante des Blechs 1, beträgt vorzugsweise zwischen 30 und 60°, weiter bevorzugt zwischen 40 und 50°, besonders bevorzugt im Wesentlichen 45°. Im Ausführungsbeispiel der Figur 1 ist die Grundlinie 7 im Wesentlichen gerade. Im Falle einer gekrümmten Grundlinie 7 kann der Winkel als ein mittlerer Winkel gemessen werden, der zwischen der Kante 8 des Blechs und einer Linie eingeschlossen wird, die Endpunkte der gekrümmten Grundlinie 7 verbindet.

Ein Gesamtvolumen aller vier Zähne 4 einer jeweiligen gestanzten Struktur 2 beträgt weniger als 2,5 mm³.

Gemäß der Figur 2 sind die Zähne 4 derart gekrümmt, dass eine Zahnspitze 9 eines jeweiligen Zahns 4 vom Loch 3 weg weist, wobei die Zahnspitzen 9 von benachbarten Zähnen 4 nicht einen minimalen Abstand zwischen den benachbarten Zähne 4 bilden. Stattdessen kann der minimale Abstand zwischen den benachbarten Zähne 4 zwischen den jeweiligen Grundlinien 7 gemessen werden. Die Zahnspitze 9 eines Zahns 4 sind zur lochabgewandten Seite gekrümmt, ragen aber nicht über die Grundlinie 7 bzw. über einen Zahnfuss hinaus. Auch wenn die Zähne 4 gekrümmt sind, kann ein Abstand zwischen zwei benachbarten Zähnen 4 größer sein als der Durchmesser des Lochs 3.

Die Krümmung der Zähne 4 kann durch Einstellen einer bestimmten Stempeltiefe eines Stempels in das Blech 1 erreicht werden. Der Stempel sorgt für die Ausbildung der gestanzten Strukturen 2. Vorzugsweise hat der Stempel im Querschnitt ein Vierkantprofil, weiter bevorzugt ein quadratisches Profil. Der Stempel kann beispielsweise eine Kantenlänge von 1,4 mm aufweisen. Dabei kann das Blech 1 beispielsweise aus einem unlegiertem Metall bestehen und eine Dicke von 0,3 mm aufweisen.

Gemäß der Figur 1 sind die gestanzten Strukturen 2 jeweils in einer Matrix mit Zeilen 10 und Spalten 11 auf beiden Hauptoberflächen 5, 6 des Blechs 1 angeordnet, wobei jeweils benachbarte Zeilen 10 in Längsrichtung der Zeilen 10 um einen halben Lochabstand voneinander verschoben sind und wobei jeweils benachbarte Spalten 11 in Längsrichtung der Spalten 11 um einen halben Lochabstand voneinander verschoben sind. Die Zeilen 10 sind senkrecht zu den Spalten 11 orientiert.

Eine Orientierung der Zeilen 10 und eine Orientierung der Spalten 11 sind im Wesentlichen parallel zu einer jeweiligen Kante 8 des Blechs 1. Im Ausführungsbeispiel der Figur 1 ist die Kante 8 eine längere Kante des Blechs 1, und eine Kante 18 ist eine kürzere Kante des Blechs 1. Die Zeilen 10 verlaufen parallel zu der längeren Kante 8 und die Spalten 11 verlaufen parallel zu der kürzeren Kante 18. In einem alternativen Ausführungsbeispiel können die Zeilen 10 parallel zu der längeren Kante 8 verlaufen, und die Spalten 11 können parallel zu der kürzeren Kante 18 verlaufen. In diesem alternativen Ausführungsbeispiel sind die Herstellungskosten des Blechs 1 geringer.

Die Matrix weist erste Zeilen 10 mit ersten gestanzten Strukturen 2, deren Zähne 4 von der einen Hauptoberfläche 5 des Blechs 1 vorstehen, und zweite Zeilen 10 mit zweiten gestanzten Strukturen 2 auf, deren Zähne 4 von der anderen Hauptoberfläche 6 des Blechs 1 vorstehen, wobei die ersten Zeilen 10 und die zweiten Zeilen 10 zueinander benachbart und abwechselnd auf beiden Hauptoberflächen 5, 6 des Blechs 1 angeordnet sind.

Die Abstände zwischen benachbarten Zeilen 10 und die Abstände zwischen benachbarten Spalten 11 sind jeweils konstant.

Damit befinden sich die Löcher 3 einer ersten Zeile 10 auf der ersten Hauptoberfläche 5, die benachbart zu einer zweiten Zeile 10 auf der zweiten Hauptoberfläche 6 angeordnet ist, im Wesentlichen mittig zwischen den Löchern 3 der zweiten Zeile 10. Gleichzeitig befinden sich die Löcher 3 einer ersten Spalte 11 auf der ersten Hauptoberfläche 5, die benachbart zu einer zweiten Spalte 11 auf der zweiten Hauptoberfläche 6 angeordnet ist, im Wesentlichen mittig zwischen den Löchern 3 der zweiten Spalte 11.

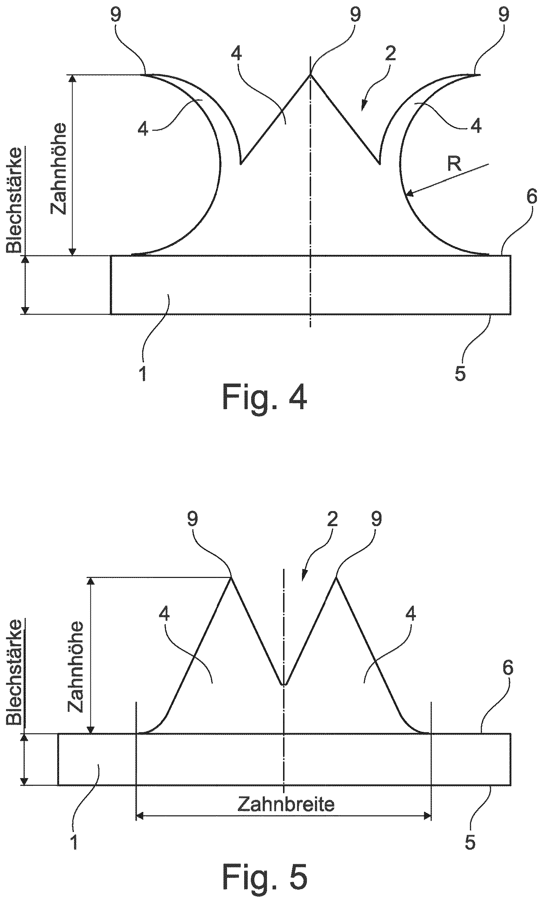

**Figur 4** zeigt eine Seitensicht auf eine gestanzte Struktur 2 aus einer Richtung A der Figur 3; und **Figur 5** zeigt eine Seitensicht auf die gestanzte Struktur 2 aus einer Richtung B der Figur 3. Die Richtung B verläuft im Wesentlichen senkrecht zu einer Kante 8 des Blechs 1, während die Richtung A im Wesentlichen in einem Winkel von 45° zu der Kante 8 des Blechs 1 verläuft. Vorzugsweise ist die Kante 8 des Blechs 1 eine lange Kante des Blechs. Zahnspitzen 9 von gegenüberliegen Zähnen 4 einer jeweiligen gestanzten Struktur 2 weisen in voneinander abgewandten Richtungen.

Eine Höhe der Zähne 4 ist 1,5 bis 5-mal, vorzugsweise 2 bis 4-mal, weiter bevorzugt 2,5 bis 3,5-mal, größer als eine Dicke des Blechs 1.

Benachbarte Zähne 4 derselben gestanzten Struktur 2 weisen einen gemeinsamen Überschneidungsbereich auf, der sich vertikal über der jeweiligen Hauptoberfläche 5, 6 des Blechs 1 erstreckt.

Gemäß der Figur 4 zeigen die benachbarten Zähne 4 derselben gestanzten Struktur 2 in einer ersten Seitenansicht A ein Kronenprofil. Das Kronenprofil kann einen Ring mit darauf angeordneten mehreren, mindestens drei Zacken aufweisen. Gemäß der Figur 5 zeigen die benachbarten Zähne 4 derselben gestanzten Struktur 2 in einer zweiten Seitenansicht B ein Profil von zwei nebeneinander angeordneten, sich teilweise überschneidenden Dreiecken. Anstelle von Dreiecken können auch Trapeze vorgesehen sein.

**Figur 6** zeigt ein Anwendungsbeispiel eines Blechs 1 gemäß einem Ausführungsbeispiel der vorliegenden Erfindung. Das Blech 1 ist zwischen zwei zu verbindenden Holzelementen 20, 30 angeordnet. Das Bezugszeichen F bezeichnet eine Schub- bzw. Scherkraft, die der Verbund der Holzelemente 20, 30 mit dem dazwischen angeordneten Blech 1 widerstehen kann. Experimentelle Untersuchungen haben gezeigt, das erfindungsgemäße Blech 1 für eine verbesserte Steifigkeit und eine erhöhte Traglast des Verbunds (d.h. über erhöhte Schub- bzw. Scherkraft F, bei der im Wesentlichen keine Relativbewegung zwischen den Holzelementen 20, 30 auftritt) im Vergleich mit Lösungen des Stands der Technik sorgt. Insbesondere konnten in den experimentellen Untersuchungen Verschiebungsmodule kser des Verbunds bestehend aus den beiden Holzelementen 20, 30 und dem dazwischen angeordneten Blech 1 von mehr als 12 N/mm*1/mm² erzielt werden. Das Verschiebungsmodul ist definiert als Kraft/Verschiebung also N/mm. Im Falle des Blechs 1 wird diese Größe auf die Fläche des Blechs 1 normiert: Kraft/Verschiebung * 1/Fläche --> N/mm x 1/mm² = N/mm³.

Das Blech 1 kann durch ein Verfahren hergestellt werden, das einen Schritt zum Stanzen des Blechs 1 mit einem Stempel derart aufweist, dass die gestanzten Strukturen 2 entstehen, die jeweils das Loch 3 mit einem Durchmesser von weniger als 5 mm, vorzugsweise weniger als 3,5 mm, weiter bevorzugt weniger als 2,5 mm, und die vier Zähne 4 aufweisen, die verteilt um den Umfang des Lochs 3 von der Hauptoberfläche 5, 6 des Blechs 1 vorstehen. Die gestanzten Strukturen 2 werden an beiden Hauptoberflächen 5, 6 des Blechs 1 vorgesehen, und zumindest bei der Mehrheit der gestanzten Strukturen 2, vorzugsweise bei allen gestanzten Strukturen 2, stehen alle Zähne 4 einer jeweiligen gestanzten Struktur 2 von derselben Hauptoberfläche 5, 6 des Blechs 1 vor. Die Anzahl der gestanzten Strukturen 2 an der einen Hauptoberfläche 5 beträgt mindestens 90%, vorzugsweise 100%, einer Anzahl der gestanzten Strukturen 2 an der anderen Hauptoberfläche 6.

Der Stempel kann ein Vierkant- oder Quadratprofil aufweisen, wobei vorzugsweise eine Kantenlänge des Stempels zwischen 1 und 2,5 mm, weiter bevorzugt zwischen 1,2 und 1,6 mm beträgt. Die definierte Krümmung der Zähne 4 kann dadurch eingestellt werden, dass eine bestimmte Stempeltiefe des Stempels (Eindringtiefe des Stempels in das Blech 1) verwendet wird.

In der Figur 4 ist die Krümmung der Zähne 4 gut zu erkennen. Die Krümmung der Zähne 4 kann für einen Hinterschnitt sorgen, so dass die Zähne 4 nicht nur die Scher- bzw. Schubkraft F auf die Holzelemente 20, 30 aufbringen, sondern auch eine Normalkraftkomponente, d.h. eine Kraftkomponente, die senkrecht zu den Hauptoberflächen 5, 6 des Blechs 1 wirkt. Damit wird eine gewisse Haftung des Blechs 1 an den Hauptoberflächen 5, 6 des Blechs 1 auch schon ohne Schraube gewährleistet.

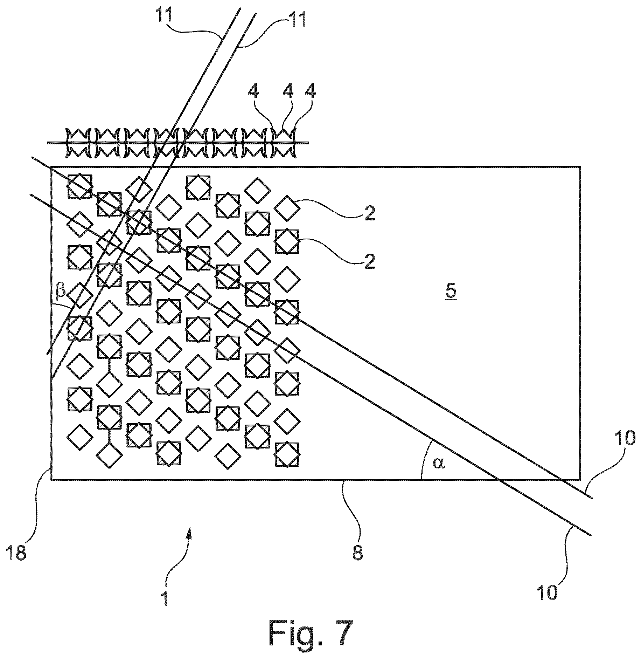

**Figur 7** zeigt eine Seitenansicht und eine Draufsicht auf ein Blech 1 gemäß einem Ausführungsbeispiel der vorliegenden Erfindung. Während bei dem Ausführungsbeispiel der Figur 1 eine Orientierung der Zeilen 10 und eine Orientierung der Spalten 11 im Wesentlichen parallel zu einer jeweiligen Kante 8 des Blechs 1 sind, verlaufen bei dem Ausführungsbeispiel der Figur 7 eine Orientierung der Zeilen 10 und eine Orientierung der Spalten 11 in jeweiligen Winkeln α, β zu einer jeweiligen Kante 8, 18 des Blechs 1, wobei die Winkel in einem Bereich zwischen 30 und 60° liegen, vorzugsweise im Wesentlichen jeweils 45° betragen. Außerdem sind die gestanzten Strukturen 2 einer Zeile 10 abwechselnd auf beiden Hauptoberflächen 5, 6 des Blechs 1 angeordnet, und die gestanzten Strukturen 2 einer Spalte 11 sind abwechselnd auf beiden Hauptoberflächen 5, 6 des Blechs 1 angeordnet. In vorteilhafter Weise wird dadurch ein direkter Kraftübertrag zwischen den Zähnen 4 der gestanzten Strukturen 2 von benachbarter Spalten 11 erreicht, so dass aufgrund dieser Herstellungsweise Eigenspannungen im Blech 1 durch eine gleichmäßigere Verteilung der gestanzten Strukturen 2 minimiert und die herstellbedingte Ebenheit des Bleches 1 optimiert werden können.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichenliste

- 1: Blech
- 2: gestanzte Struktur
- 3: Loch
- 4: Zahn
- 5: die eine Hauptoberfläche
- 6: die andere Hauptoberfläche
- 7: Grundlinie
- 8: längere Kante
- 9: Zahnspitze
- 10: Zeile der Matrix
- 11: Spalte der Matrix
- 18: kürzere Kante
- 20: Holzelement
- 30: Holzelement
- A: Seitenansicht
- B: Seitenansicht
- F: Schubkraft
- α: Zeilenwinkel
- β: Spaltenwinkel

## Patentansprüche

1. Blech (1) zum Verbinden von zwei Holzelementen (20, 30), wobei das Blech (1) gestanzte Strukturen (2) aufweist, die jeweils ein Loch (3) mit einem Durchmesser von weniger als 5 mm, vorzugsweise weniger als 3,5 mm, weiter bevorzugt weniger als 2,5 mm, und vier Zähne (4) aufweisen, die verteilt um einen Umfang des Lochs (3) von einer Hauptoberfläche (5, 6) des Blechs (1) vorstehen; wobei
die gestanzten Strukturen (2) an beiden Hauptoberflächen (5, 6) des Blechs (1) vorgesehen sind;
zumindest bei der Mehrheit der gestanzten Strukturen (2), vorzugsweise bei allen gestanzten Strukturen (2), alle Zähne (4) einer jeweiligen gestanzten Struktur (2) von derselben Hauptoberfläche (5, 6) des Blechs (1) vorstehen; und
eine Anzahl der gestanzten Strukturen (2) an der einen Hauptoberfläche (5) mindestens 90%, vorzugsweise 100%, einer Anzahl der gestanzten Strukturen (2) an der anderen Hauptoberfläche (6) beträgt.

2. Blech (1) gemäß dem vorherigen Anspruch, wobei
eine Dicke des Blechs (1) kleiner als 0,5 mm ist.

3. Blech (1) gemäß einem der vorherigen Ansprüche, wobei
die Zähne (4) jeweils eine Grundlinie (7) aufweisen, die einer Schnittlinie des jeweiligen Zahns (4) mit der entsprechenden Hauptoberfläche (5, 6) des Blechs (1) entspricht und an der der jeweilige Zahn (4) von der entsprechenden Hauptoberfläche (5, 6) des Blechs (1) vorsteht;
wobei ein Winkel der Grundlinie (7) zu einer Kante (8) des Blechs (1), vorzugsweise einer langen Kante des Blechs (1), vorzugsweise zwischen 30 und 60°, weiter bevorzugt zwischen 40 und 50°, besonders bevorzugt im Wesentlichen 45° beträgt; wobei vorzugsweise bei einer gekrümmten Grundlinie (7) der Winkel als ein mittlerer Winkel gemessen wird, der zwischen der Kante (8) des Blechs und einer Linie eingeschlossen wird, die Endpunkte der Grundlinie (7) verbindet.

4. Blech (1) gemäß einem der vorherigen Ansprüche, mit zumindest einem der folgenden Merkmale:
ein Gesamtvolumen aller vier Zähne (4) einer jeweiligen gestanzten Struktur (2) weniger als 2,5 mm³ beträgt;
die Zähne (4) derart gekrümmt sind, dass eine Zahnspitze (9) eines jeweiligen Zahns (4) vom Loch (3) weg weist, und wobei die Zahnspitzen (9) von benachbarten Zähnen (4) nicht einen minimalen Abstand zwischen den benachbarten Zähne (4) bilden;
die Zähne (4) gekrümmt sind und ein Abstand zwischen zwei benachbarten Zähnen (4) größer ist als der Durchmesser des Lochs (3);
das Blech (1) dazu konfiguriert ist, von einer Schraube durchschraubt zu werden;
Zahnspitzen (9) von gegenüberliegen Zähnen (4) einer jeweiligen gestanzten Struktur (2) in voneinander abgewandten Richtungen weisen;
eine Höhe der Zähne (4) 1,5 bis 5-mal, vorzugsweise 2 bis 4-mal, weiter bevorzugt 2,5 bis 3,5-mal, größer ist als eine Dicke des Blechs (1);
das Blech (1) kaltverfestigt ist und die Zähne (4) gehärtet sind;
eine Anzahl der gestanzten Strukturen (2) pro cm² zwischen 2 und 15, vorzugsweise zwischen 3 und 10, weiter bevorzugt zwischen 5 und 8 beträgt.

5. Blech (1) gemäß einem der vorherigen Ansprüche, wobei
die gestanzten Strukturen (2) jeweils in einer Matrix mit Zeilen (10) und Spalten (11) auf beiden Hauptoberflächen (5, 6) des Blechs (1) angeordnet sind, wobei jeweils benachbarte Zeilen (10) in Längsrichtung der Zeilen (10) um einen halben Lochabstand voneinander verschoben sind und wobei jeweils benachbarte Spalten (11) in Längsrichtung der Spalten (11) um einen halben Lochabstand voneinander verschoben sind.

6. Blech (1) gemäß dem vorherigen Anspruch, wobei
die Matrix erste Zeilen (10) mit ersten gestanzten Strukturen (2), deren Zähne (4) von der einen Hauptoberfläche (5) des Blechs (1) vorstehen, und zweite Zeilen (10) mit zweiten gestanzten Strukturen (2) aufweist, deren Zähne (4) von der anderen Hauptoberfläche (6) des Blechs (1) vorstehen, wobei die ersten Zeilen (10) und die zweiten Zeilen (10) zueinander benachbart und abwechselnd auf beiden Hauptoberflächen (5, 6) des Blechs (1) angeordnet sind.

7. Blech (1) gemäß einem der Ansprüche 5 und 6, wobei
eine Orientierung der Zeilen (10) und eine Orientierung der Spalten (11) im Wesentlichen parallel zu einer jeweiligen Kante (8) des Blechs (1) sind; oder
eine Orientierung der Zeilen (10) und eine Orientierung der Spalten (11) in jeweiligen Winkeln (α, β) zu einer jeweiligen Kante (8, 18) des Blechs (1) verlaufen, wobei die Winkel in einem Bereich zwischen 30 und 60° liegen, vorzugsweise im Wesentlichen jeweils 45° betragen.

8. Blech (1) gemäß einem der Ansprüche 5 bis 7, wobei
die gestanzten Strukturen (2) einer Zeile (10) abwechselnd auf beiden Hauptoberflächen (5, 6) des Blechs (1) angeordnet sind, und/oder
die gestanzten Strukturen (2) einer Spalte (11) abwechselnd auf beiden Hauptoberflächen (5, 6) des Blechs (1) angeordnet sind.

9. Blech (1) gemäß einem der Ansprüche 5 bis 8, wobei
die Zeilen (10) parallel zu einer längeren Kante (8) des Blechs (1) verlaufen und die Spalten (11) parallel zu einer kürzeren Kante (18) des Blechs (1) verlaufen.

10. Blech (1) gemäß einem der vorherigen Ansprüche, wobei
benachbarte Zähne (4) derselben gestanzten Struktur (2) einen gemeinsamen Überschneidungsbereich aufweisen, der sich vertikal über der jeweiligen Hauptoberfläche (5, 6) des Blechs (1) erstreckt, wobei die benachbarten Zähne (4) derselben gestanzten Struktur (2) in einer ersten Seitenansicht (A) vorzugsweise ein Kronenprofil zeigen.

11. Blech (1) gemäß dem vorherigen Anspruch, wobei
die benachbarten Zähne (4) derselben gestanzten Struktur (2) in einer zweiten Seitenansicht (B) ein Profil von zwei nebeneinander angeordneten, sich teilweise überschneidenden Dreiecken oder Trapezen zeigen.

12. Verbund aus zwei Holzelementen (20, 30) mit dazwischen angeordnetem Blech (1) gemäß einem der vorherigen Ansprüche.

13. Verfahren zum Herstellen eines Blechs (1) zum Verbinden von zwei Holzelementen (20, 30) mit den folgenden Schritten:
Stanzen des Blechs (1) mit einem Stempel, so dass gestanzte Strukturen (2) entstehen, die jeweils ein Loch (3) mit einem Durchmesser von weniger als 5 mm, vorzugsweise weniger als 3,5 mm, weiter bevorzugt weniger als 2,5 mm, und vier Zähne (4) aufweisen, die verteilt um einen Umfang des Lochs (3) von einer Hauptoberfläche (5, 6) des Blechs (1) vorstehen; wobei
die gestanzten Strukturen (2) an beiden Hauptoberflächen (5, 6) des Blechs (1) vorgesehen werden;
zumindest bei der Mehrheit der gestanzten Strukturen (2), vorzugsweise bei allen gestanzten Strukturen (2), alle Zähne (4) einer jeweiligen gestanzten Struktur (2) von derselben Hauptoberfläche (5, 6) des Blechs (1) vorstehen; und
eine Anzahl der gestanzten Strukturen (2) an der einen Hauptoberfläche (5) mindestens 90%, vorzugsweise 100%, einer Anzahl der gestanzten Strukturen (2) an der anderen Hauptoberfläche (6) beträgt.

14. Verfahren gemäß dem vorherigen Anspruch, wobei
der Stempel ein Vierkant- oder Quadratprofil aufweist, wobei vorzugsweise eine Kantenlänge des Stempels zwischen 1 und 2,5 mm, weiter bevorzugt zwischen 1,2 und 1,6 mm beträgt.

15. Verfahren gemäß Anspruch 13 oder 14, wobei
eine definierte Krümmung der Zähne (4) eingestellt wird, indem eine bestimmte Stempeltiefe des Stempels verwendet wird.
